# EUROPEAN PATENT APPLICATION

(11) **EP 1 538 239 A2**
(43) Date of publication of application: **08.06.2005**
(21) Application number: 04257466.5
(22) Date of filing: 01.12.2004
(51) Int. Cl.: C23C 28/00, C23C 24/08, C23C 30/00, C23C 26/00, C23C 4/18, F01D 5/28

(54) **Sprayable noble metal coating for high temperature use on ceramic and smoothcoat coated aircraft engine parts**

(30) Priority: 03.12.2003 US 726357
(71) Applicant: GENERAL ELECTRIC COMPANY, Schenectady, NY 12345 (US)
(72) Inventor: Skoog, Andrew Jay, West Chester, Ohio 45069 (US); Lattire, Timothy Ray, Sunman, Indiana 47041 (US); Murphy, Jane Ann, Franklin, Ohio 45005 (US)
(74) Representative: Goode, Ian Roy

(57) **Abstract**

A method applies a heat-rejection coating directly on a substrate of a ceramic component. The steps include supplying a ceramic component (40), such as of a gas turbine engine, before applying a reflective-coating mixture onto the component (54), wherein the reflective-coating mixture comprises a metallic pigment and a reflective-coating-mixture carrier, and wherein the step of applying is accomplished by a method selected from the group consisting of air-assisted spraying, airless spraying, brushing, and decal transfer. The component having the reflective-coating mixture thereon is fired (56) to form a reflective coating on the component.

## Description

This invention relates to the coating of articles and, more particularly, to an economical, effective approach for coating aircraft gas turbine parts to reject heat and thereby reduce thermal fatigue failures to help meet life objectives without using additional cooling air.

A continuing trend is to increase the operating temperature of the gas turbine engine, as higher temperatures lead to greater thermodynamic efficiency. The ability of the engine to operate at ever-higher temperatures is limited by the materials used in the engine. A variety of techniques are used to achieve increased operating temperatures of the materials. Improved materials with inherently higher operating temperatures are developed. New processing techniques, such as directional solidification and improved heat treatments are utilized. Ceramic materials, such as ceramic matrix composites, are increasingly used. Bleed-air cooling by air directed from the compressor to the hot sections of the engine is widely used.

Coatings are also important contributors to the increased temperature capability of modern gas turbine engines. Environmental coatings inhibit corrosive damage to the coated articles, allowing them to operate in environments, such as the high-temperature corrosive combustion gas, for which they would otherwise be unsuited. Ceramic thermal barrier coatings serve as insulation layers and are usually overlying environmental coatings that serve as bond coats, such as MCrAIYs.

Another type of coating is a layer of an optically reflective material that reflects a portion of the incident radiative heat loading away from the coated article which also may be made of a metal or a ceramic. This type of heat-reflective and heat-rejection coating may be made of a metal or a ceramic adhered to the surface of the protected article which also may be made of metal or ceramic. The drawbacks of these coatings are that they are relatively expensive to apply and may adversely affect the properties of the underlying substrate article upon which they are deposited. Additionally, it is difficult to apply the coatings to large articles due to processing equipment requirements and limitations.

There is a need for an approach to applying heat-reflective coatings that may be readily and inexpensively utilized both for newly made and repaired/refurbished articles, and which does not adversely affect the underlying substrate articles upon which the coatings are applied. The present invention fulfills this need, and further provides related advantages.

The present invention provides a heat-rejection coating that is readily and inexpensively applied to a ceramic substrate article such as a ceramic article or a smoothcoat coating that is bonded to a substrate of a ceramic or metallic article. The heat-rejection coating aids in preventing heating of the article by reflecting incident radiant energy. The present approach is readily utilized with large articles that do not fit into the deposition chambers required for prior approaches.

A method of applying a heat-rejection coating comprises the steps of supplying a ceramic component of a gas turbine engine, air-assisted spraying a reflective-coating mixture onto the component, the reflective-coating mixture comprising a metallic pigment and a carrier, and firing the component having the reflective-coating mixture thereon to form a reflective coating on the component.

The component to which the reflective coating is applied is most preferably made of a ceramic, although the component may also be a ceramic having a smoothcoat, which is discussed in U.S. Patent No. 6,210,791 that is incorporated by reference, or even a smoothcoat modification on a metallic alloy, such as superalloy, or a ceramic matrix composite. The term ceramic is intended to include any component that is substantially composed of ceramic material as well as constructions including ceramic fibers or precursors that are transformed to ceramics by appropriate processing to form a ceramic matrix composite. The reflective coating may be applied directly to a ceramic substrate, or may be applied over a smoothcoat layer that is bonded to a superalloy or ceramic matrix composite substrate. Examples of components to which the coating may be applied include an exhaust nozzle convergent flap, an exhaust nozzle convergent seal, and parts that experience radiation in the combustion and exhaust systems.

The reflective-coating mixture desirably includes the metallic pigment in the form of finely divided particles and/or metal salts which precipitate atomic size metal particles of a metal such as platinum, gold, palladium, silver, rhodium or alloys of these metals such as platinum-rhodium alloys. The carrier is an evaporable liquid that allows the metallic pigment to flow through the air-spray system and then aids in initially adhering the metallic pigment to the surface of the component prior to firing. Organic carriers are preferred.

The reflective coating is quite thin, both to conserve the expensive metal and to avoid a coating that adversely affects the properties of the underlying component. Because the reflective coating is thin, it is preferred to specify its quantity by areal weight rather than by thickness. Most preferably, the reflective coating is present in an amount of from about 0.00275 to about 0.00475 grams per square inch of the component surface being coated.

Preferably, the component surface is pre-treated prior to the application of the reflective-coating mixture, so that the reflective-coating mixture is air sprayed onto the pre-treated surface. For metallic alloys, pre-treatments preferably include one or more of (a) grit blasting the component surface, (b) applying a bond coat to the component surface, (c) applying a thermal barrier coat over the bond coat, (d) applying a smoothcoat over the thermal barrier coat, and (e) applying a ceramic barrier coating over the smoothcoat and thereafter drying the ceramic barrier coating. Most preferably, pre-treatments (a)-(e) are used together, in the indicated order for metallic alloys. For ceramics, which may be provided with a smoothcoat over the substrate, the pre-treatment optionally includes (e) applying the ceramic barrier coating onto the component surface and thereafter drying the ceramic barrier coating.

The ceramic barrier coating, where used, is preferably applied by air-assisted spraying a ceramic-barrier-coating mixture onto the surface of the component, and then drying the ceramic-barrier-coating mixture to form the ceramic barrier coating. The ceramic barrier coating is preferably supplied as the ceramic-barrier-coating mixture of particles of a ceramic material such as lanthanum and cerium, dispersed in a ceramic-barrier coating carrier such as an organic liquid. The ceramic barrier coating, where used, is desirably thin. The reflective coating and the ceramic barrier coating are preferably together present in an amount of from about 0.00325 to about 0.00625 grams per square inch of the component surface being coated.

The reflective coating and, preferably, the ceramic barrier coating are both applied by airless or air-assisted spraying. Airless or air-assisted spraying is a technique comparable to the familiar spraying of ordinary paint, and is typically performed at room temperature using an air-spray-gun type of device. The material to be sprayed, here the reflective coating and possibly the ceramic barrier coating, are not significantly heated during the spray process (although they are heated subsequently in the firing step). Airless or air-assisted spraying is to be contrasted with other spray techniques used to deposit other types of coatings in the gas turbine industry, such as vacuum plasma spraying and air plasma spraying, which are not within the scope of the invention. Plasma spray techniques are performed by heating the material to be sprayed to high temperatures and then forcing the heated material against the surface with a flow of the spray gas. Airless or air-assisted spraying is also to be contrasted with other types of deposition techniques such as chemical vapor deposition, physical vapor deposition, and electrodeposition, all of which require complex deposition apparatus, and all of which are not within the scope of the invention. Most of these other application techniques are limited as to the size of the articles that may be readily coated, because they require special chambers or other types of application apparatus. Airless or air-assisted spraying which are typically ambient room temperature processes, on the other hand, are not limited by these considerations, and therefore may be readily used on a wide variety of sizes and shapes of components.

Other room-temperature application techniques such as high velocity low pressure (HVLP), brushing, and application by a decal transfer method may also be used in the present approach.

The present approach may be used to deposit an alloyed metallic coating, as distinct from a pure metallic coating.

Other features and advantages of the present invention will be apparent from the following more detailed description of the preferred embodiment, taken in conjunction with the accompanying drawings, which illustrate, by way of example, the principles of the invention, and in which:
Figure 1 is an elevational view of a gas turbine engine;
Figure 2 is an enlarged schematic sectional view of the gas turbine engine of Figure 1, showing a variable-geometry-exhaust-nozzle;
Figure 3 is a block flow diagram of a preferred approach for practicing the invention;
Figure 4 is a schematic sectional view of a coated component by the approach of Figure 3;
Figure 5 is a schematic sectional view of an air-spray apparatus;
Figure 6 is a block flow diagram of an additional approach for practicing the invention;
Figure 7 is a schematic sectional view of a coated component by the approach of Figure 6;
Figures 8-12 are graphs of hemispherical reflectance at preselected reflection angles for
As-received smoothcoated Inconel® 625 plus a first reflective coating exposed to 1,650°F for 1 hour (Figure 8),
As-received smoothcoated Inconel® 625 plus a first ceramic barrier coat and then a second reflective coating exposed to 1,650°F for one hour (Figure 9),
As-received smoothcoated Inconel® 625 plus a first ceramic barrier coat and then a second reflective coating exposed to 1,650°F for one hour, then aged at 1,650°F for 50 hours (Figure 10),
As-received smoothcoated Inconel® 625 plus a first ceramic barrier coat and then a second reflective coating exposed to 1,650°F for one hour, then aged at 1,800°F for 1 hour (Figure 11), and
As-received smoothcoated Inconel® 625 plus a first ceramic barrier coat and then a second reflective coating exposed to 1,650°F for one hour, then aged at 1,800°F for 1 hour and 25 hours (Figure 12).

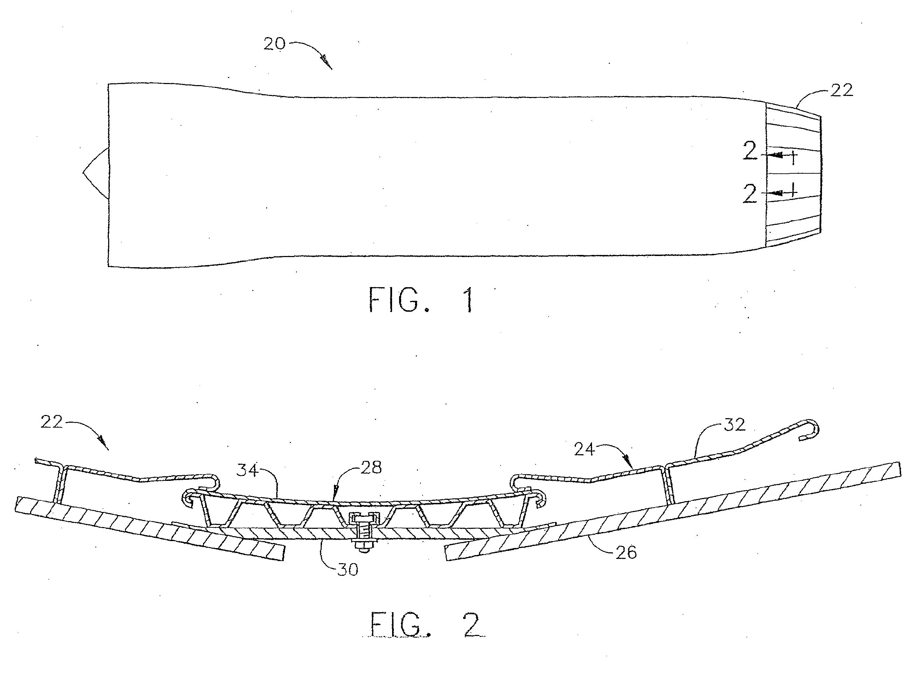

Figure 1 is an elevational view of a gas turbine engine 20 with a variable-geometry exhaust nozzle 22, a portion of which is shown in greater detail in the sectional view of Figure 2. The exhaust nozzle 22 includes an exhaust nozzle convergent flap 24 and its support 26, and an exhaust nozzle convergent seal 28 and its support 30. This structure extends around the entire circumference of the exhaust nozzle 22. The exhaust nozzle convergent flaps 24 are pivoted inwardly and outwardly to controllably alter the area of the exhaust nozzle, and the exhaust nozzle convergent seals 28 prevent combustion gas leakage between the exhaust nozzle flaps 24. Variable-geometry exhaust nozzle 22 structures of this and other types are known in the art, and Figures 1-2 illustrate only the elements of the structure pertinent to one application of the present invention.

The exhaust nozzle convergent flaps 24 and exhaust nozzle convergent seals 28 are heated by the contact of the hot combustion gas flowing through the variable-geometry exhaust nozzle 22, when they are pivoted inwardly to reduce the area of the exhaust nozzle. In a typical case, the inwardly facing surfaces of the exhaust nozzle convergent flaps 24 and the exhaust nozzle convergent seals 28 frequently reach temperatures as high as 1,400°F, and occasionally approaching 1,800°F, absent the heat-rejection coating of the present invention. The present approach provides a technique for coating these elements on their inwardly facing surfaces 32 and 34, respectively, with a heat rejection coating that reduces the temperature reached by as much as 300°F.

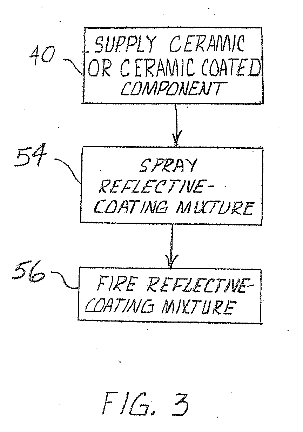

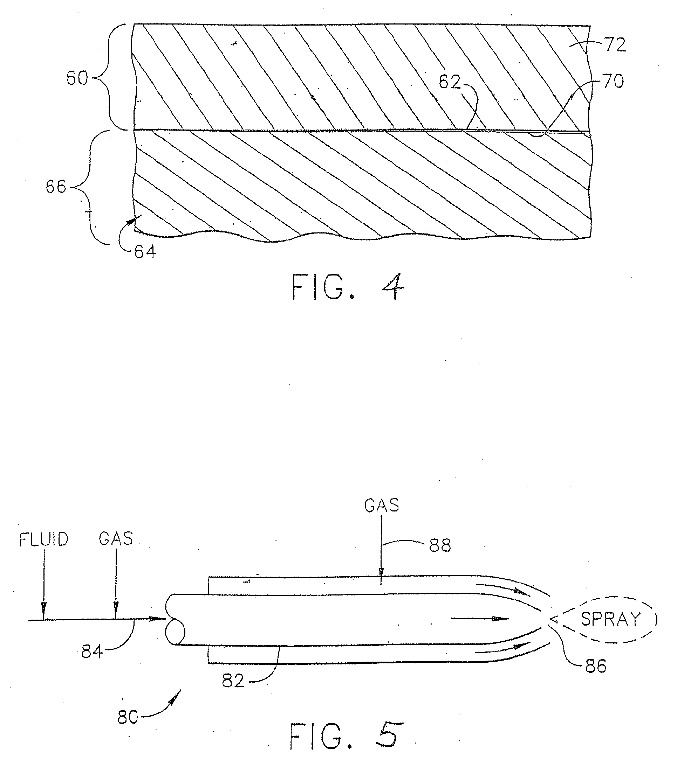

Figure 3 depicts a preferred approach for applying a heat-rejection coating to a ceramic component or ceramic coated component and Figure 4 (which is not drawn to scale) shows such a heat-rejection coating 60 deposited on a surface 62 of a ceramic component or ceramic coated component 64, which serves as a substrate 66 for the heat-rejection coating 60. The ceramic component or ceramic coated component 64 is supplied, numeral 40. The ceramic component or ceramic coated component 64 is preferably a component of a gas turbine engine, such as the exhaust nozzle convergent flap 24 or the exhaust nozzle convergent seal 28. The ceramic component or ceramic coated component 64 is preferably comprised of inorganic nonmetallic materials characterized by high melting points, high compressive strength, good strength retension at high temperatures and excellent resistance to oxidation at high temperatures. As supplied, ceramic component or ceramic coated component 64 may have a smoothcoat (not shown) applied over surface 62 as is known in the art.
However, the smoothcoat is not required to produce a coated article of the present invention.

Once the ceramic component has been supplied 40, a reflective-coating mixture is thereafter directly air sprayed, numeral 54, onto the component surface 62. The reflective-coating mixture comprises fine particles of a metallic pigment, such as platinum, gold, palladium, and alloys thereof, mixed with an organic reflective-coating-mixture carrier. A platinum/gold blend is preferred as the metallic pigment. A suitable platinum-containing reflective-coating mixture is Engelhard Spray Bright Platinum A4707, available from Engelhard Corporation, East Newark, New Jersey. The Bright Platinum A4707 comprises about 1-30 percent by weight metallo-organic platinum compounds, remainder organic compounds. A suitable gold-containing reflective coating mixture is Liquid Bright 'N' Gold, available from Engelhard Corporation, East Newark, New Jersey. The Liquid Bright 'N' Gold material comprises about 12 percent by weight noble metal, including, but not limited to platinum, silver, gold and combinations thereof, remainder organic compounds. Preferably, the reflective coating mixture is a blend of about 25 percent by weight Bright Platinum A4707 with the remaining portion being Liquid Bright 'N' Gold. A reflective coating comprised of this particular blended reflective coating mixture that is applied over a substrate of a component has functioned substantially as intended while being subjected to the harsh engine combustion environment enduring temperatures up to about 1,650°F for as much as about 2,000 hours.

Each of the reflective coating formulations advantageously encapsulates the noble metal contained within the formulation, which encapsulation is believed to prevent stress corrosion cracking if salts and the noble metal come in contact with metal compounds. Additionally, the reflective coating formulations contain fluxes and glass formers, as well as the encapsulated noble metal, which each contribute to prevent the reflective coating from diffusing into the substrate of the component at high temperatures.

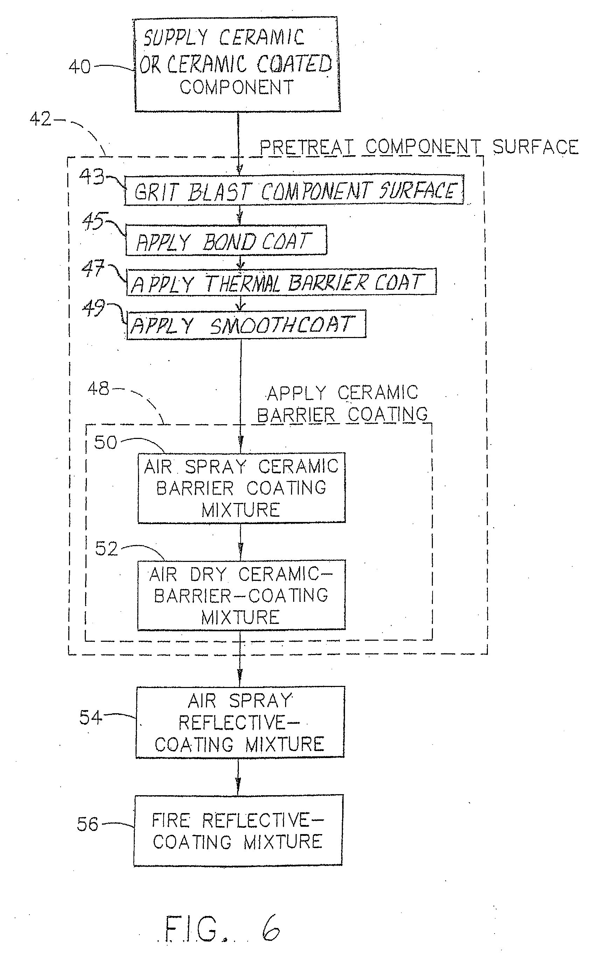

The air-assisted spraying 54 is accomplished with an air-spray apparatus 80, such as that depicted schematically in Figure 5. The air-spray apparatus 80 includes a hollow tube 82 into which a flow 84 of the fluid mixture to be air sprayed is introduced under pressure. The flow 84 expands through an expansion nozzle 86 and vaporizes to form a mist of the air-sprayed material. The mist is actually formed from the vaporized organic carrier, and the solid particles of the ceramic material are carried with the flow of the mist to the surface being air sprayed. Additional gas or fluid may be introduced through an assist line 88 to shape the flow exiting the nozzle 86.

The air-spraying is performed in ambient conditions, that is, in air, without heating either the flow of the mixture being sprayed or the substrate. It is readily performed quickly and inexpensively on components 64 of any size, using the easily operated apparatus 80. Air-assisted spraying is contrasted with other types of deposition techniques often used to deposit coatings on gas turbine components, such as plasma spraying, vapor phase aluminiding, and chemical vapor deposition, all of which are performed at elevated temperatures and in most cases in special atmospheric chambers or devices. Air-assisted spraying is also contrasted with electrodeposition and dipping techniques, which require that the article be immersed in a liquid medium. Alternative approaches which are within the scope of the present invention are airless spraying, HVLP, brushing, and decal transfer application.

It is preferred that the air-assisted spraying 54 applies the reflective-coating mixture in several layers, allowing each layer to air dry before the next layer is applied.

The component 64 having the reflective-coating mixture thereon is thereafter fired to form a reflective coating 72, numeral 56. The firing 56 is performed by heating the reflective-coating mixture to an elevated temperature in air. A preferred temperature range is from about 1,100°F to about 2,150°F, and a most-preferred firing 56 is at about 1,650°F for about one hour. The preferred approach is to heat the entire component 64 and the applied coating 72 to the firing temperature.

The reflective coating 72 is applied in an amount such that the total amount of the reflective coating 72 is present in an amount of from about 0.00325 to about 0.0625 grams per square inch of the component surface 62 to which it is applied. That is, the reflective coating 72 is preferably present in an amount of from about 0.00275 to about 0.0475 grams per square inch of the component surface 62.

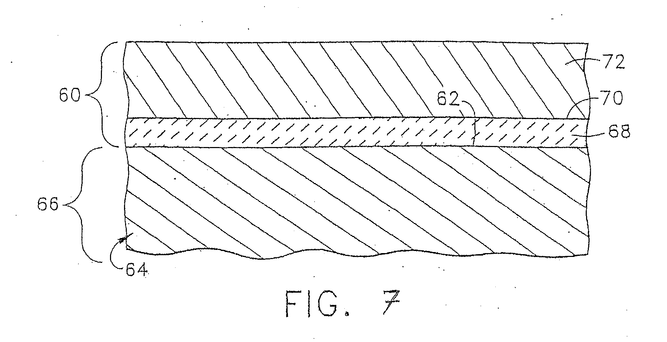

However, if the component is subjected to temperature between about 1,650°F to about 1,800°F, and even exceeding 1,800°F for short periods of time, an alternate coating and approach to applying the coating to the component is presented. Figure 6 depicts an alternate approach for applying a heat-rejection coating that can withstand exposure to this elevated temperature, and Figure 7 (which is not drawn to scale) shows a ceramic barrier coating 68 that is applied to the surface 62 of the ceramic component or ceramic coated component 64 with the reflective coating 72 then being applied over the surface 70 of the ceramic barrier coating 68.

Once the component 64 is supplied, numeral 40, the component surface 62 of the component 64 is optionally but preferably pre-treated, numeral 42, to form a pre-treated component surface. When the component 64 is metallic, the component surface 62 is preferably grit blasted with abrasive particles to remove grease, oxide scale, and other impurities, numeral 43. Once the component 64 is grit blasted, a bond coat such as MCrAlY or aluminide is applied over the component surface 62, numeral 45, followed by a thermal barrier coat (TBC) that is applied over the bond coat, numeral 47, which TBC is then covered by a smoothcoat, numeral 49, as is well known in the art. For simplicity, optional bond coat, TBC and smoothcoat are not shown. Next, in this pre-treatment, a ceramic barrier coating 68 is applied to the component surface 62, numeral 48. The application 48 of the ceramic barrier coating 68 may be accomplished by any operable technique. The application is preferably performed by air-assisted spraying, numeral 50, of a ceramic-barrier-coating mixture onto the component surface 62. The ceramic-barrier-coating mixture preferably includes fine particles of a ceramic material such as lanthanum and cerium, dispersed in an organic carrier material. (As used herein, "ceramic material" includes both materials that are initially a ceramic, and materials that are ceramic precursors and become ceramics during subsequent processing.) A suitable commercially available material that may be used as the ceramic-barrier-coating mixture is Engelhard Liquid Metal A4841, available from Engelhard Corporation, East Newark, New Jersey. The Liquid Metal A4841 comprises about 1-5 percent by weight rare earth compounds, preferably lanthanum and/or cerium, as the fine particles of ceramic material, remainder organic compounds. Alternately, other ceramic barrier coating mixtures include, but are not limited to A6294XB and A6294B, also available from Engelhard Corporation.

The air-assisted spraying 50 is accomplished with an air-spray apparatus 80, such as that depicted schematically in Figure 5 as previously discussed.

After the air-assisted spraying 50 is complete, the ceramic-barrier-coating mixture, now deposited on the surface 62 of the component 64, is dried, numeral 52, preferably in air at room temperature. It is usually preferred to apply several thin layers, such as three coats, of the mixture being applied in successive passes, allowing the as-applied mixture to dry between coats.

The resulting ceramic barrier coating 68 may be of any operable thickness, but is preferably quite thin. The ceramic barrier coating material is most preferably present in an amount of from about 0.0005 to about 0.0015 grams per square inch of the pre-treated component surface 62.

This completes the optional pre-treatment 42. It is preferred to deposit the ceramic barrier coating 68 to provide a wettable surface for the application of the reflective-coating mixture, to prevent interdiffusion of the subsequently applied reflective coating with the base material of the component 64, and to provide temperature stability for the reflective-barrier coating.

A reflective-coating mixture is thereafter air sprayed, numeral 54, onto the component surface 62, or, if the pre-treatment is used, the pre-treated component surface 62 or a surface 70 of the ceramic barrier coating 68 if the step 48 is used. The reflective-coating mixture comprises fine particles of a metallic pigment, such as platinum, gold, palladium, and alloys thereof, mixed with an organic reflective-coating-mixture carrier. A platinum/gold blend is preferred as the metallic pigment. As previously discussed in the Figure 3, preferably, the reflective coating mixture is a blend of about 25 percent by weight Bright Platinum A4707 with the remaining portion being Liquid Bright 'N' Gold. The blended reflective coating mixture maintains a high performance across all heat rejection bands and has a silver appearance as applied.

Alternately, glass or ceramic materials can be added as filler to either reflective coat formulation. This filler material can comprise up to about 25 percent by weight of the reflective coat. Further, dispersants can also be used which reduce the surface tension of droplets within the spray stream contacting the component surface being sprayed such that more uniform coatings are achieved.

The component 64 having the reflective-coating mixture thereon is thereafter fired to form a reflective coating 72, numeral 56. The firing 56 is performed by heating the reflective-coating mixture to an elevated temperature in air. A preferred temperature range is from about 1,100°F to about 2,150°F, and a most-preferred firing 56 is at 1,650°F for one hour. The preferred approach is to heat the entire component 64 and the applied coating 72 (and the coating 68, where present) to the firing temperature.

Similar to the Figure 3 process, the reflective coating 72 is applied in an amount such that the total amount of the reflective coating 72 and the ceramic barrier coating 68 (where used) are together present in an amount of from about 0.00325 to about 0.00625 grams per square inch of the component surface 62.

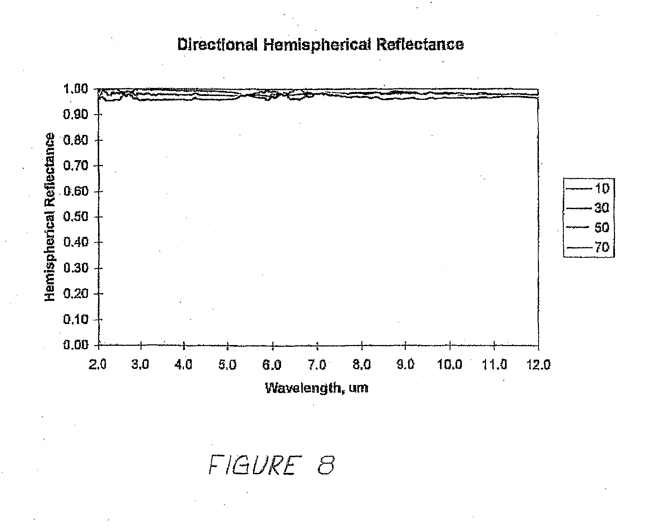

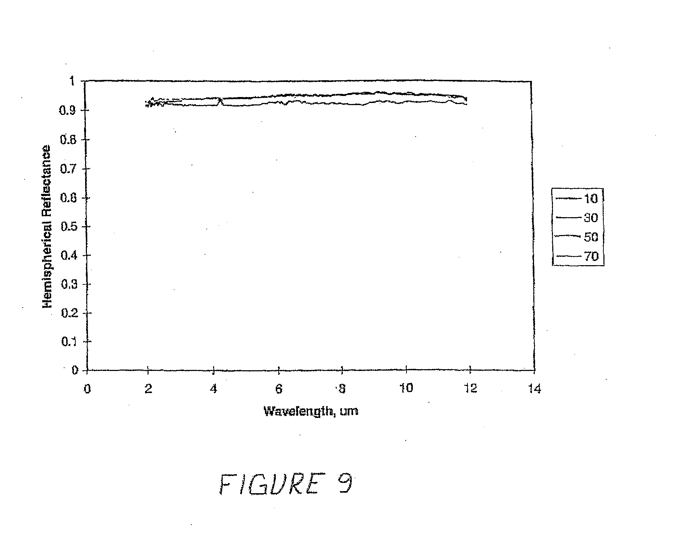

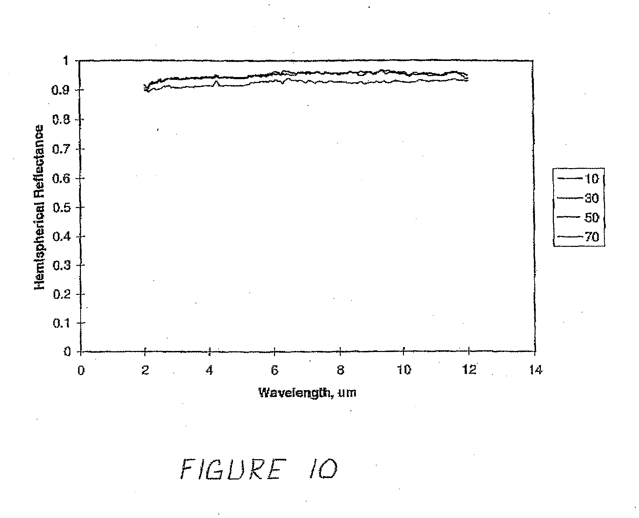

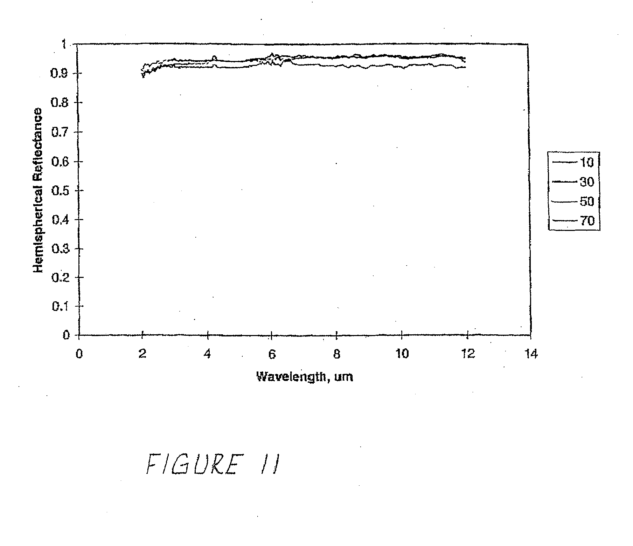

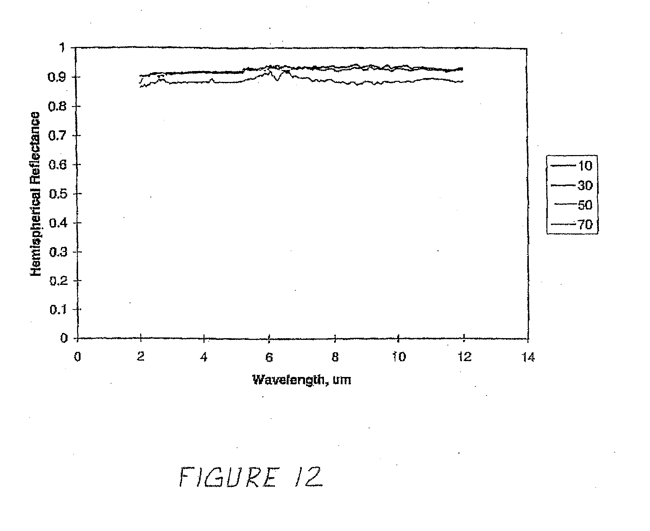

The present approach has been reduced to practice by the procedure discussed above and the performance of the coated components tested. Figures 8-12 present some illustrative test results for these coating components for a series of aging testing with Inconel® 625, which is in weight percent nominally 62 percent nickel, 21 percent chromium, 9 percent molybdenum, 3.7 percent of a mixture of columbium and tantalum, 5 percent iron, 1 percent cobalt, 0.5 percent silicon, 0.5 percent manganese, 0.4 percent aluminum, 0.4 percent titanium, and 0.1 percent cobalt, and further provided with a smoothcoat layer. These figures depict the hemispherical reflectance at preselected angles of 10, 30, 50 and 70 degrees as a function of wavelength in micrometers, in the infrared spectrum. As seen in Figure 8, the smoothcoated Inconel® 625 that is covered by a coat of Liquid Bright 'N' Gold and exposed to 1,650°F for 1 hour has a low reflectance over the measured portion of the infrared spectrum. Similarly, Figure 9 shows the smoothcoated Inconel® 625 covered by a coat of a 75/25 mixture of Liquid Bright 'N' Gold and Spray Bright Platinum as previous discussed exposed to 1,650°F for 1 hour. Figures 10-12 show the same coating configuration of Figure 9 under different aging conditions. For Figure 10, exposure is at 1,650°F for 1 hour followed by a 50 hour aging exposure at 1,650°F, Figure 11 exposure is at 1,650°F for 1 hour followed by a 1 hour aging exposure at 1,800°F, and finally, Figure 12 exposure is at 1,650°F for 1 hour followed by successive aging exposures of 1 hour at 1,800°F and at 1,800°F for 25 hours. Throughout this series of aging tests, for each of the measured reflectance angles, the measured reflectance is consistently maintained at a high level, which translates into reduced temperature of the engine component during service.

## Claims

1. A method of applying a heat-rejection coating, comprising the steps of:
supplying a component of a gas turbine engine having an outer ceramic surface (40);
providing a reflective-coating mixture, wherein the reflective-coating mixture comprises a metallic pigment and an evaporable carrier;
applying the mixture (54) to the outer ceramic surface by a method selected from the group consisting of air-assisted spraying, airless spraying, brushing, and decal transfer; and
firing the component (56) having the reflective-coating mixture thereon to form a reflective coating on the ceramic component.

2. The method of claim 1, wherein the step of applying the reflective-coating mixture (54) includes applying the reflective-coating mixture by air-assisted spraying.

3. The method of claim 1, wherein the step of providing the reflective-coating mixture (54) includes providing the metallic pigment selected from the group consisting of platinum, gold, silver, rhodium, palladium, and alloys thereof.

4. The method of claim 1, wherein the step of providing the reflective-coating mixture (54) includes providing an organic reflective-coating-mixture carrier.

5. The method of claim 1, wherein the step of applying the reflective-coating mixture (54) includes a step of air-assisted spraying the reflective-coating mixture such that the reflective coating has an areal weight of from about 0.00275 to about 0.00475 grams per square inch of a surface to which it is applied.

6. The method of claim 1, further including an additional step, before the step of providing the reflective-coating mixture, of applying a ceramic thermal barrier coating (48) over the component surface, and wherein the step of applying the reflective-coating mixture (54) includes the step of applying the reflective-coating mixture onto the ceramic barrier coating applied to the component surface.

7. The method of claim 6, wherein the step of applying the ceramic barrier coating (48) further includes applying a coating comprising a ceramic material selected from the group consisting of lanthanum and cerium.

8. The method of claim 6, wherein the step of applying the ceramic barrier coating (48) further includes applying a ceramic-barrier-coating mixture to the surface such that the mixture has an areal weight of from about 0.00325 to about 0.00625 grams per square inch.

9. The method of claim 6, wherein the step of applying the ceramic barrier coating (48) further includes the step of air-assisted spraying the ceramic-barrier-coating mixture onto the component, and drying the ceramic-barrier-coating mixture.

10. A method of applying a heat-rejection coating, comprising the steps of:
supplying a component of a gas turbine engine (40), the component having a ceramic surface;
pre-treating the component surface (42) to form a pre-treated component surface; thereafter
air-assisted spraying a reflective-coating mixture (54) onto the pre-treated component surface, the reflective-coating mixture comprising a metallic pigment and a reflective-coating-mixture carrier; and
firing the component (56) having the coating mixture thereon.
